# EUROPEAN PATENT APPLICATION

(11) **EP 3 901 731 A1**
(43) Date of publication of application: **27.10.2021**
(21) Application number: 20171064.7
(22) Date of filing: 23.04.2020
(51) Int. Cl.: G06F 1/16, H01R 13/22, H02J 7/00, H04M 1/02

(54) **VEHICLE TABLET COMPUTER**

(71) Applicant: Amobile Intelligent Corp. Limited, Kowloon (HK)
(72) Inventor: LEE, Min, 220 New Taipei City (TW)
(74) Representative: Viering, Jentschura & Partner mbB Patent- und Rechtsanwälte

(57) **Abstract**

A vehicle tablet computer (100) includes a housing (1), a touch-control module (2) arranged in the housing (1), and a power-charging structure (51) that is disposed on a short lateral side of the housing (1) and that is electrically coupled to the touch-control module (2). An outer surface (21) of the touch-control module (2) is exposed from the housing (1), and defines two diagonal lines (L) that are crossed to have a point (P). The power-charging structure (51) includes two metal pads (511) exposed from the housing (1). The two metal pads (511) have an interval (G) there-between and each define a contact region (512) that has a maximum diameter less than the interval (G). A projection region defined by orthogonally projecting any one of the metal pads (511) onto a plane, which overlaps with the outer surface (21), is arranged in an angle scope defined by taking the point (P) to be an apex and counting from the adjacent diagonal line (L) with 12-18 degrees.

## Description

### FIELD OF THE DISCLOSURE

The present disclosure relates to a tablet computer, and more particularly to a vehicle tablet computer.

### BACKGROUND OF THE DISCLOSURE

In order to comply with vehicle safety standards, the structural design of a conventional vehicle tablet computer in recent years has not undergone significant modification. Specifically, the conventional vehicle tablet computer has a power-charging structure (e.g., a USB socket) located at a center of one short lateral side thereof, so that an electricity transmission path electrically coupled to a power-charging structure and a battery in the conventional vehicle tablet computer needs to be arranged along a central portion of the conventional vehicle tablet computer. However, this arrangement of the electricity transmission path resulting from the location of the power-charging structure may divide an inner space of the conventional vehicle tablet computer into two substantially identical portions, thus affecting the layout of other electronic components and easily generating an electro-magnetic interference to other electronic components when the power-charging structure and the electricity transmission path are used to transmit electricity.

### SUMMARY OF THE DISCLOSURE

In response to the above-referenced technical inadequacies, the present disclosure provides a vehicle tablet computer to effectively improve on the issues associated with conventional vehicle tablet computers.

In one aspect, the present disclosure provides a vehicle tablet computer, which includes a housing, a touch-control module, and a power-charging structure. The housing has two long lateral sides and two short lateral sides, and the housing surroundingly defines a receiving space. The touch-control module is arranged in the receiving space of the housing and has an outer surface exposed from the housing. The outer surface defines two diagonal lines that intersect to define a point. The power-charging structure is disposed on one of the two short lateral sides and is electrically coupled to the touch-control module. The power-charging structure has two metal pads exposed from the housing, and any one of the two metal pads defines at least one contact region for being abutted against a terminal of a charging plug. The two metal pads have an interval there-between that is greater than a maximum diameter of the at least one contact region. A projection region defined by orthogonally projecting any one of the two metal pads onto a plane that overlaps with the outer surface is located within an angle range of 12 - 18 degrees defined between the point, being taken as an apex, and an adjacent one of the two diagonal lines.

In certain embodiments, the vehicle tablet computer further includes a USB socket disposed in the housing and electrically coupled to the touch-control module. The USB socket and the power-charging structure are disposed on the same short lateral side and are arranged adjacent to each other.

In certain embodiments, the vehicle tablet computer further includes a circuit board assembly disposed in the housing and including a power supply circuit connected to the touch-control module. The USB socket and the power-charging structure are mounted on the circuit board assembly and are electrically coupled to the power supply circuit.

In certain embodiments, the circuit board assembly includes a controller that is configured to stop the USB socket from supplying electricity when the USB socket and the power-charging structure simultaneously supply electricity to the touch-control module.

In certain embodiments, the housing has a mating slot recessed in the short lateral side that is adjacent to the USB socket and the power-charging structure, and an insertion opening of the USB socket and the two metal pads of the power-charging structure are each arranged in the mating slot.

In certain embodiments, the housing includes a back board connected to the two long lateral sides and the two short lateral sides, and the vehicle tablet computer further includes a photograph module mounted on the back board. Moreover, a projection region defined by orthogonally projecting the photograph module onto the plane is arranged in an angle scope defined by taking the point to be an apex and counting from any one of the two diagonal lines with 22 - 40 degrees.

In certain embodiments, the back board includes a main segment connected to the two long lateral sides and two end segments respectively arranged at two opposite sides of the main segment and respectively connected to the two short lateral sides. Each of the two end segments has a flat surface arranged on a center thereof and two curved surfaces respectively arranged at two opposite sides of the flat surface, and wherein the photograph module is exposed from the housing through the flat surface.

In certain embodiments, the vehicle tablet computer further includes a barcode scanner disposed in the housing and electrically coupled to the touch-control module. The barcode scanner and the power-charging structure are disposed on the same short lateral side.

In certain embodiments, a projection region defined by orthogonally projecting the barcode scanner onto the plane is arranged in an angle scope defined by taking the point to be an apex and counting from any one of the two diagonal lines with 26 - 37 degrees.

In certain embodiments, the interval is within a range of 0.8 - 1.2 mm.

Therefore, in the vehicle tablet computer of the present disclosure, any circuit connected to the two metal pads can be arranged outside of a center portion of the vehicle tablet computer by the distribution or arrangement of the two metal pads, so that an inner space (i.e., the receiving space) of the vehicle tablet computer can be divided into two different sized portions for reducing limitations to the layout of other electronic components and for effectively preventing the power-charging structure in operation from electro-magnetically interfering with other electronic components

Moreover, when the power-charging structure is connected to the charging plug, the terminal cannot touch the two metal pads at the same time based on the interval greater than the maximum diameter of the contact region, thereby effectively preventing the power-charging structure from being inoperable.

These and other aspects of the present disclosure will become apparent from the following description of the embodiment taken in conjunction with the following drawings and their captions, although variations and modifications therein may be affected without departing from the spirit and scope of the novel concepts of the disclosure.

### BRIEF DESCRIPTION OF THE DRAWINGS

The present disclosure will become more fully understood from the following detailed description and accompanying drawings.
FIG. 1 is a perspective view of a vehicle tablet computer according to a first embodiment of the present disclosure.
FIG. 2 is a perspective view of FIG. 1 from another angle of view.
FIG. 3 is a functional block of the vehicle tablet computer of FIG. 1.
FIG. 4 is a front view of FIG. 1.
FIG. 5 is a top view of FIG. 1.
FIG. 6 is an enlarged view of portion VI of FIG. 5.
FIG. 7 is a rear view of FIG. 1.
FIG. 8 is a front view of a vehicle tablet computer according to a second embodiment of the present disclosure.
FIG. 9 is a top view of the vehicle tablet computer according to the second embodiment of the present disclosure.
FIG. 10 is an enlarged view of portion X of FIG. 9.
FIG. 11 is a front view of the vehicle tablet computer according to the second embodiment of the present disclosure.

### DETAILED DESCRIPTION OF THE EXEMPLARY EMBODIMENTS

The present disclosure is more particularly described in the following examples that are intended as illustrative only since numerous modifications and variations therein will be apparent to those skilled in the art. Like numbers in the drawings indicate like components throughout the views. As used in the description herein and throughout the claims that follow, unless the context clearly dictates otherwise, the meaning of "a", "an", and "the" includes plural reference, and the meaning of "in" includes "in" and "on". Titles or subtitles can be used herein for the convenience of a reader, which shall have no influence on the scope of the present disclosure.

The terms used herein generally have their ordinary meanings in the art. In the case of conflict, the present document, including any definitions given herein, will prevail. The same thing can be expressed in more than one way. Alternative language and synonyms can be used for any term(s) discussed herein, and no special significance is to be placed upon whether a term is elaborated or discussed herein. A recital of one or more synonyms does not exclude the use of other synonyms. The use of examples anywhere in this specification including examples of any terms is illustrative only, and in no way limits the scope and meaning of the present disclosure or of any exemplified term. Likewise, the present disclosure is not limited to various embodiments given herein. Numbering terms such as "first", "second" or "third" can be used to describe various components, signals or the like, which are for distinguishing one component/signal from another one only, and are not intended to, nor should be construed to impose any substantive limitations on the components, signals or the like.

### [First Embodiment]

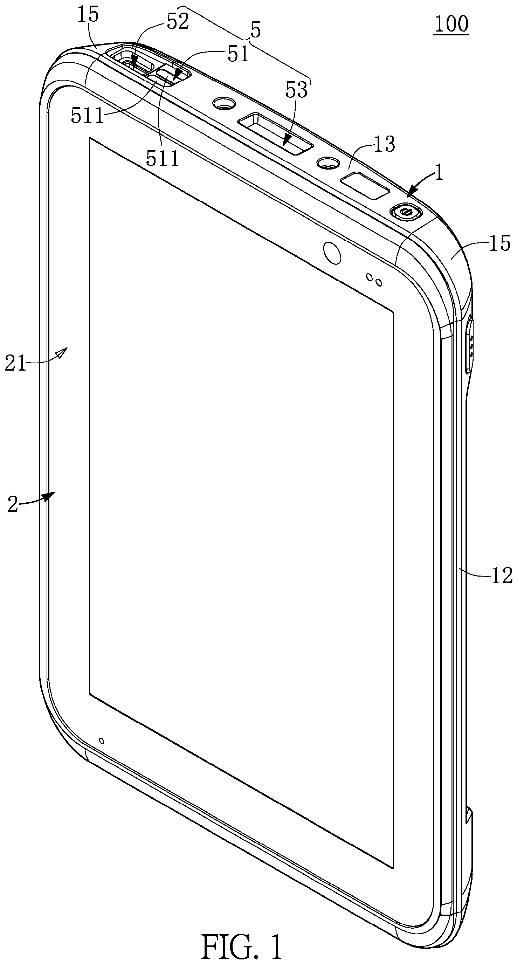

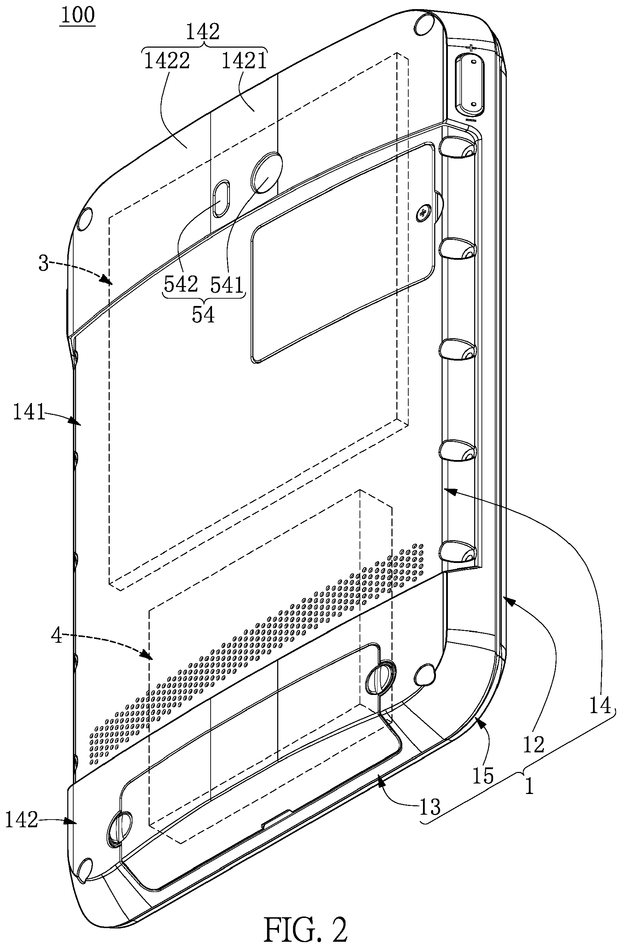

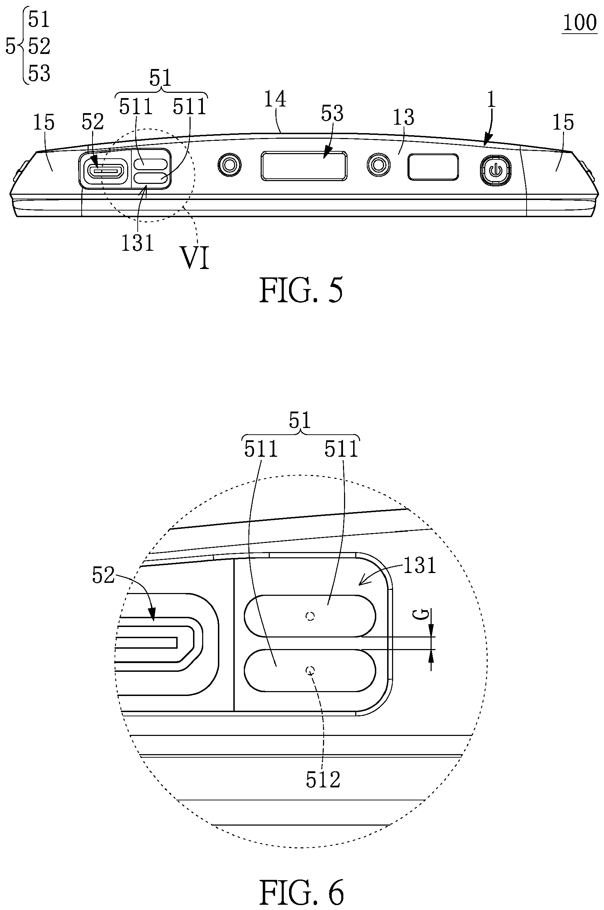

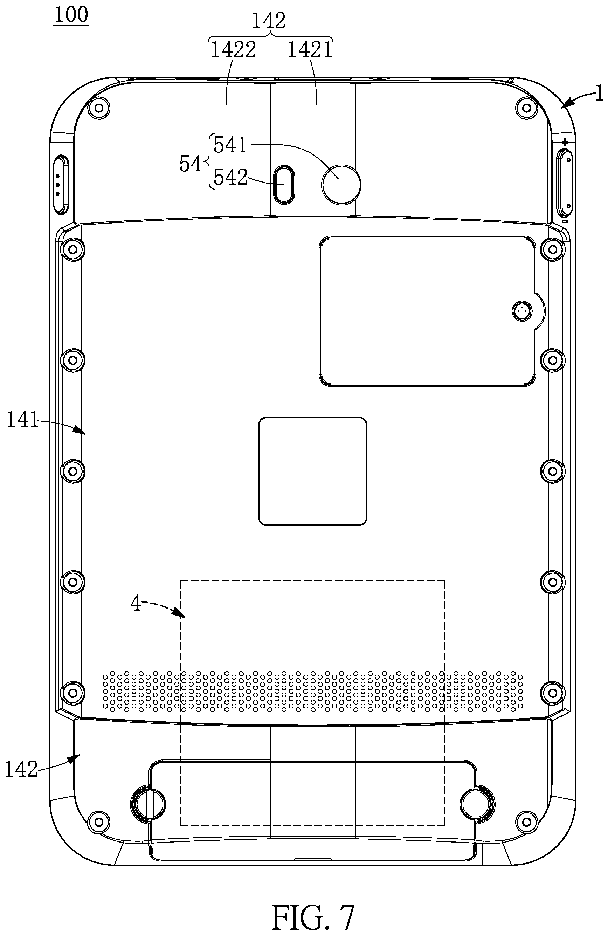

Referring to FIG. 1 to FIG. 7, a first embodiment of the present disclosure provides a vehicle tablet computer 100, which excludes any generally tablet computer that is not applied to a vehicle. In other words, the structural and functional requirements of the vehicle tablet computer 100 are different from that of a common tablet computer, so that the generally tablet computer does not provide any motivation to achieve the structural and functional requirements of the vehicle tablet computer 100.

As shown in FIG. 1 to FIG. 3, the vehicle tablet computer 100 in the present embodiment includes a housing 1, a touch-control module 2 assembled in the housing 1, a circuit board assembly 3 and a recharging battery 4 both disposed in the housing 1 and electrically coupled to each other, and an electronic assembly 5 that is mounted on the circuit board assembly 3 and that is disposed on the housing 1. It should be noted that the vehicle tablet computer 100 in the present embodiment includes the above components, but the present disclosure is not limited thereto. For example, in other embodiments of the present disclosure, at least one component of the electronic assembly 5 is not mounted on the circuit board assembly 3, and can be connected to a corresponding component by a cable; or, the vehicle tablet computer 100 can be provided by omitting at least one of the following components of the electronic assembly 5.

The housing 1 in the present embodiment has a substantially rectangular shape, and has a receiving space (not shown) therein. The housing 1 includes two long lateral sides 12, two short lateral sides 13, and a back board 14 that is connected to the two long lateral sides 12 and the two short lateral sides 13. In other words, the two long lateral sides 12, the two short lateral sides 13, and the back board 14 in the present embodiment can jointly define the receiving space therein. In addition, according to design requirements, at least one of the two long lateral sides 12, the two short lateral sides 13, and the back board 14 of the housing 1 can have a structural design (e.g., a slot) corresponding in function to other components.

The two long lateral sides 12 are parallel to each other and are arranged on two opposite sides of the housing 1 (e.g., the left side and the right side of the housing 1 shown in FIG. 1), respectively. The two short lateral sides 13 are parallel to each other and are arranged on the other two opposite sides of the housing 1 (e.g., the upper side and the lower side of the housing 1 shown in FIG. 1), respectively. Two ends of each of the two short lateral sides 13 are connected to the two long lateral sides 12, respectively. Any one of the two short lateral sides 13 is connected to any one of the two long lateral sides 12 by a chamfer 15.

Moreover, the back board 14 includes a main segment 141 and two end segments 142. The main segment 141 is connected to the two long lateral sides 12, and the two end segments 142 are respectively arranged at two opposite sides of the main segment 141 and are respectively connected to the two short lateral sides 13. An outer surface of the main segment 141 is a curved surface, and each of the two end segments 142 has a flat surface 1421 arranged on a center thereof and two curved surfaces 1422 respectively arranged at two opposite sides of the flat surface 1421. In the present embodiment, the outer surface of the main segment 141 is substantially flush with the curved surfaces 1422 of the two end segments 142, and the position of the flat surface 1421 of each of the two end segments 142 is lower than the position of an adjacent portion of the outer surface of the main segment 141.

The touch-control module 2 is arranged in the receiving space of the housing 1, and an outer surface 21 of the touch-control module 2 is exposed from the housing 1. For example, the outer surface 21 in the present embodiment is in a planar shape and includes a touch-control surface and a decorative surface surrounding the touch-control surface. In order to clearly define positions of other components in the present embodiment, the outer surface 21 of the touch-control module 2 defines two diagonal lines L that intersect to define a point P. Moreover, the touch-control module 2 is electrically coupled to the circuit board assembly 3, thereby obtaining electricity from the recharging battery 4 or an external power source (not shown) through the circuit board assembly 3.

The circuit board assembly 3 and the recharging battery 4 in the present embodiment are arranged in the receiving space of the housing 1, and are located at a back side of the touch-control module 2. In other words, the circuit board assembly 3 and the recharging battery 4 are disposed between the back board 14 and the touch-control module 2, and are arranged adjacent to the two short lateral sides 13, respectively. The circuit board assembly 3 is located at an upper side of the recharging battery 4.

The circuit board assembly 3 includes a power supply circuit 31 connected to the touch-control module 2, a charging circuit 32 connected to the recharging battery 4, and a controller 33 that is connected to the power supply circuit 31 and the charging circuit 32. Moreover, the electronic assembly 5 in the present embodiment is arranged adjacent to the circuit board assembly 3. The electronic assembly 5 includes a power-charging structure 51, a USB socket 52, a barcode scanner 53, and a photograph module 54, which are disposed in the housing 1. However, in other embodiments of the present disclosure, the components of the circuit board assembly 3 or the components of the electronic assembly 5 can be added, omitted, or combined according to design requirements.

The power-charging structure 51 and the USB socket 52 are mounted on the circuit board assembly 3. The power-charging structure 51 and the USB socket 52 are disposed on one of the two short lateral sides 13 of the housing 1 that is arranged adjacent to the circuit board assembly 3 (e.g., the upper short lateral side 13 shown in FIG. 1), and are arranged adjacent to each other. The USB socket 52 in the present embodiment is arranged between the power-charging structure 51 and the adjacent chamfer 15.

Moreover, the power-charging structure 51 and the USB socket 52 in the present embodiment are electrically coupled to the power supply circuit 31 through the controller 33, and then are further electrically coupled to the touch-control module 2. Accordingly, the controller 33 is configured to stop the USB socket 52 from providing electricity when the USB socket 52 and the power-charging structure 51 simultaneously provide electricity to the touch-control module 2, thereby preventing the touch-control module 2 from being damaged, but the present disclosure is not limited thereto. For example, in other embodiments of the present disclosure, the power-charging structure 51 and/or the USB socket 52 can be electrically coupled to the touch-control module 2, directly.

In addition, the power-charging structure 51 and the USB socket 52 in the present embodiment is also electrically coupled to the charging circuit 32 through the controller 33, and then are further electrically coupled to the recharging battery 4. Accordingly, the controller 33 is configured to stop the USB socket 52 from providing electricity when the USB socket 52 and the power-charging structure 51 simultaneously provide electricity to the recharging battery 4, thereby preventing the recharging battery 4 from being damaged, but the present disclosure is not limited thereto. For example, in other embodiments of the present disclosure, the power-charging structure 51 and/or the USB socket 52 can be electrically coupled to the recharging battery 4, directly.

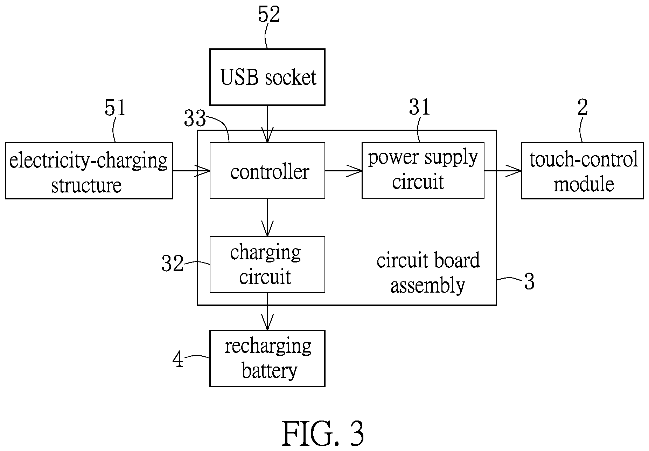

Specifically, as shown in FIG. 3 to FIG. 6, the power-charging structure 51 includes two metal pads 511 exposed from the housing 1 through the corresponding short lateral side 13. The two metal pads 511 are substantially parallel to the corresponding short lateral side 13, and are parallel to each other. Any one of the two metal pads 511 defines at least one contact region 512 for being abutted against a terminal of a charging plug (not shown). In other words, a portion of the metal pad 511 for being abutted against the terminal in the present embodiment is defined as the contact region 512.

The two metal pads 511 have an interval G there-between that is greater than a maximum diameter of the contact region 512. Accordingly, when the power-charging structure 51 is connected to the charging plug, the terminal cannot both touch the two metal pads 511 at the same time due to the interval G being greater than the maximum diameter of the contact region 512, thereby effectively preventing the power-charging structure 51 from being inoperable. Moreover, the interval G in the present embodiment is within a range of 0.8 - 1.2 mm, thereby effectively preventing the two metal pads 511 from electro-magnetically interfering with each other during an electricity transmission of the two metal pads 511.

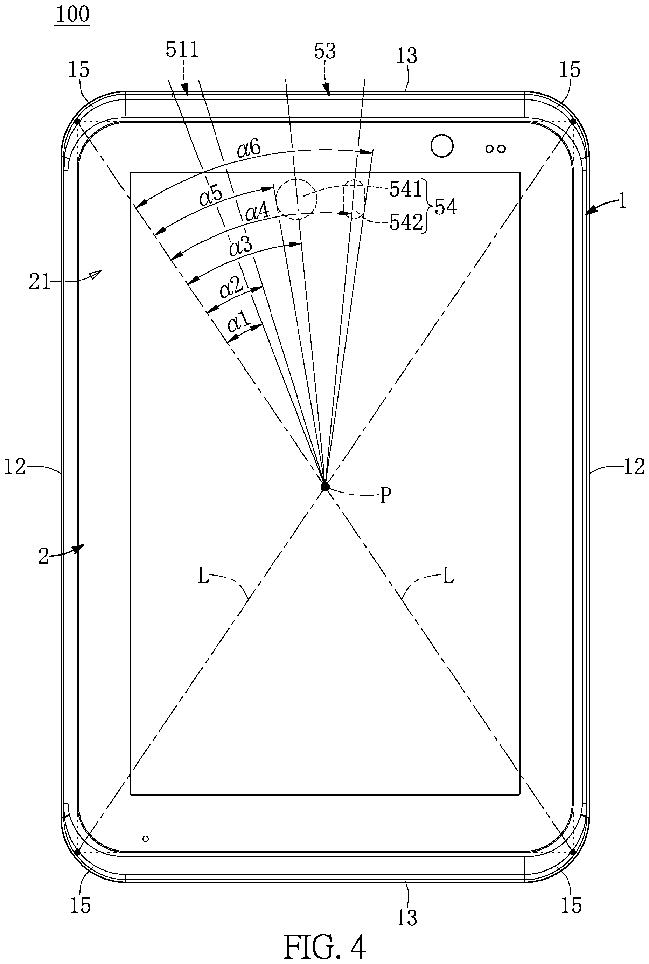

In other words, as shown in FIG. 4, a projection region defined by orthogonally projecting any one of the two metal pads 511 onto a plane that overlaps with the outer surface 21 of the touch-control module 2 is located within an angle range (e.g., α1 - α2) of 12 - 18 degrees defined between the point P, being taken as an apex, and an adjacent one of the two diagonal lines L. Accordingly, any circuit connected to the two metal pads 511 can be arranged outside of the center portion of the vehicle tablet computer 100 (or the circuit board assembly 3) by the distribution or arrangement of the two metal pads 511 (e.g., any circuit connected to the two metal pads 511 can be formed on a portion of the circuit board assembly 3 that is in the angle scope of α1 - α2), so that the inner space (i.e., the receiving space) of the vehicle tablet computer 100 can be divided into two different-sized portions for reducing limitations to the layout of other electronic components and for effectively preventing the power-charging structure 51 in operation from electro-magnetically interfering with other electronic components (e.g., a distance between the power-charging structure 51 and any electronic component that is easily electro-magnetically interfered can be increased).

In addition, the housing 1 has a mating slot 131 recessed in the short lateral side 13 that is adjacent to the USB socket 52 and the power-charging structure 51, and the mating slot 131 in the present embodiment is partially arranged on one of the chamfers 15 adjacent thereto. Moreover, an insertion opening of the USB socket 52 and the two metal pads 511 of the power-charging structure 51 are arranged in the mating slot 131. Accordingly, when lightning is generated outside of the vehicle tablet computer 100, the USB socket 52 and the two metal pads 511 of the power-charging structure 51 can effectively avoid experiencing an electro-magnetic interference of the lightning by being arranged in the mating slot 131 of the insulating housing 1.

The barcode scanner 53 is fastened to the circuit board assembly 3. The barcode scanner 53 and the power-charging structure 51 are disposed on the same short lateral side 13, and the barcode scanner 53 is electrically coupled to the touch-control module 2 through the circuit board assembly 3, but the present disclosure is not limited thereto. For example, in other embodiments of the present disclosure, the barcode scanner 53 and the power-charging structure 51 can be disposed on the two short lateral sides 13, respectively.

Specifically, the barcode scanner 53 in the present embodiment is disposed on a substantially central region of the corresponding short lateral side 13, so that the power-charging structure 51 is arranged between the barcode scanner 53 and the USB socket 52. In other words, as shown in FIG. 4, a projection region defined by orthogonally projecting the barcode scanner 53 onto the plane is arranged in an angle scope (e.g., α3 - α4) defined by taking the point P to be an apex and counting from any one of the two diagonal lines L with 26 - 37 degrees.

The photograph module 54 in the present embodiment includes a camera 541 and a flash 542 that operates in cooperation with the camera 541, but the present disclosure is not limited thereto. The photograph module 54 is mounted on the back board 14, and is exposed from the housing 1 through the flat surface 1421. Moreover, the photograph module 54 is arranged adjacent to the short lateral side 13 that is adjacent to the power-charging structure 51, and is also arranged adjacent to the barcode scanner 53.

In other words, as shown in FIG. 4, a projection region defined by orthogonally projecting the photograph module 54 onto the plane is arranged in an angle scope (e.g., α5 - α6) defined by taking the point P to be an apex and counting from any one of the two diagonal lines L with 22 - 40 degrees. Accordingly, the barcode scanner 53 and the photograph module 54 can be arranged close to the center of the vehicle tablet computer 100 by the distribution or arrangement of the two metal pads 511, so that the barcode scanner 53 and the photograph module 54 can be manipulated by a user more conveniently.

### [Second Embodiment]

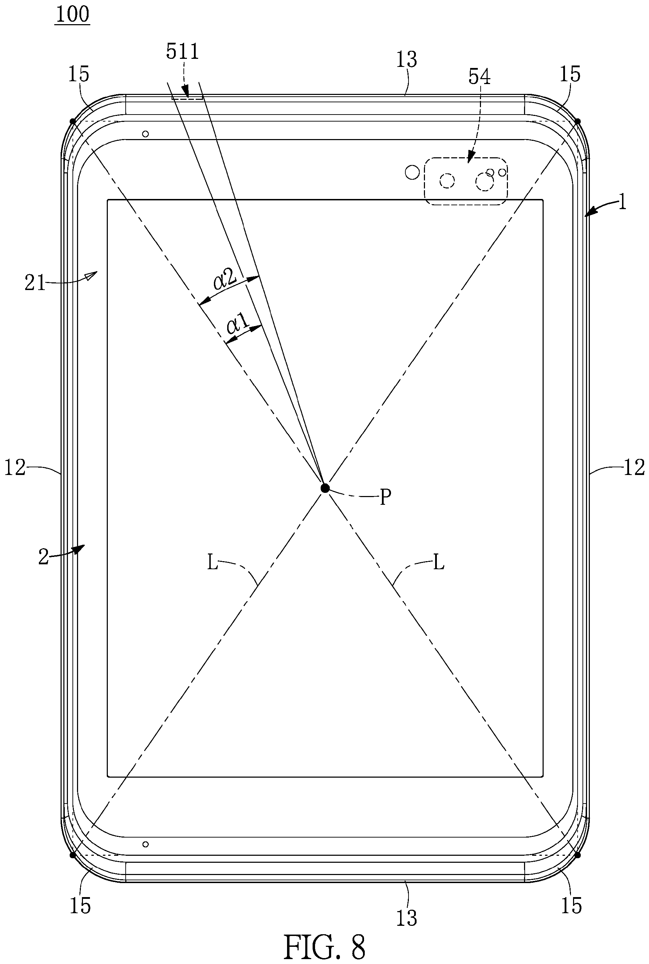

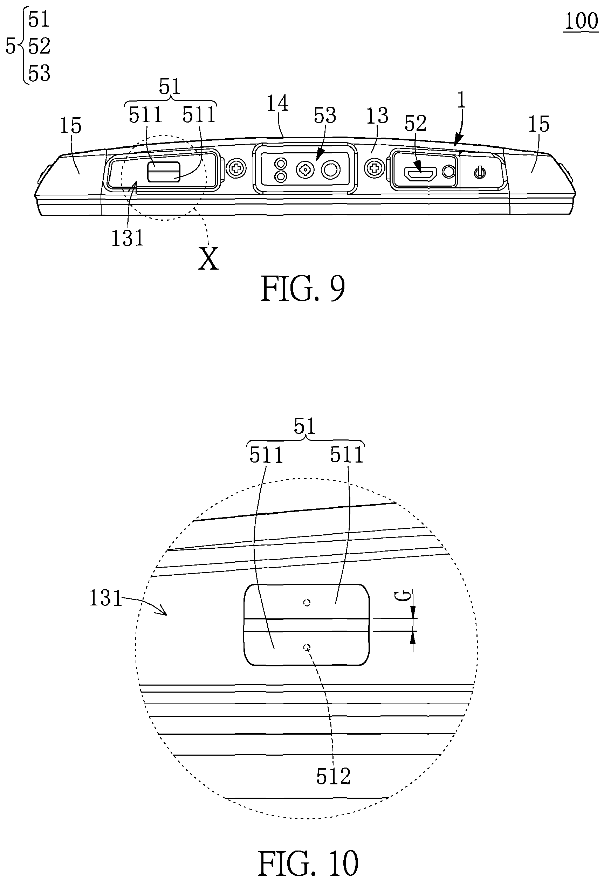

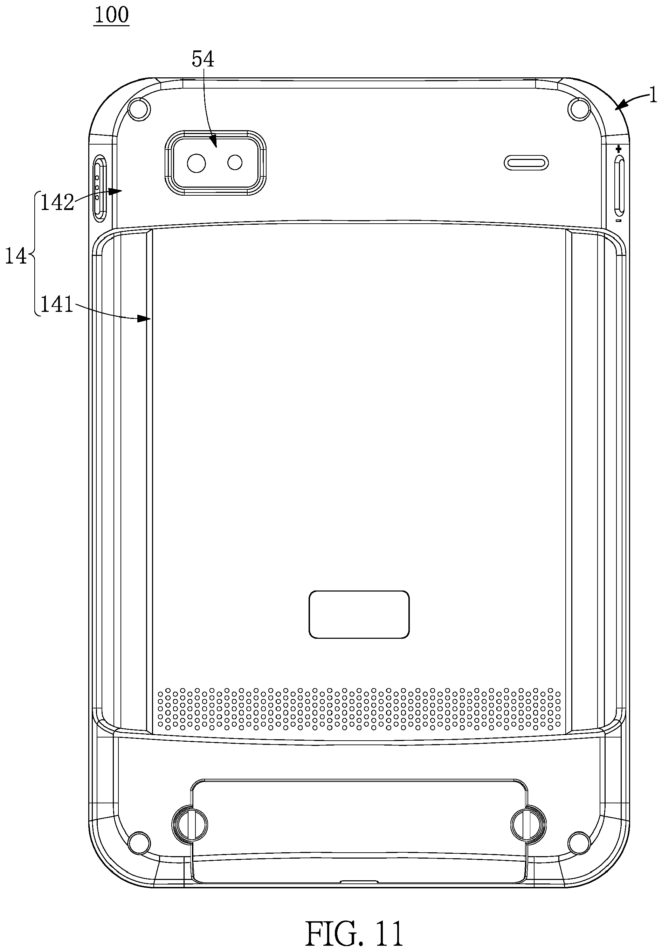

Referring to FIG. 8 to FIG. 11, a second embodiment of the present disclosure is similar to the first embodiment of the present disclosure. For the sake of brevity, descriptions of the same components in the first and second embodiments of the present disclosure will be omitted herein, and the following description only discloses different features between the first and second embodiments.

In the present embodiment, the power-charging structure 51 and the USB socket 52 can be disposed on two opposite sides of one of the two short lateral sides 13 of the housing 1, respectively. In other words, the barcode scanner 53 is arranged between the power-charging structure 51 and the USB socket 52. Moreover, the photograph module 54 is arranged adjacent to the short lateral side 13 that is adjacent to the power-charging structure 51, and is arranged adjacent to the USB socket 52.

In conclusion, in the vehicle tablet computer 100 of the present disclosure, any circuit connected to the two metal pads 511 can be arranged outside of the center portion of the vehicle tablet computer 100 by the distribution or arrangement of the two metal pads 511, so that the inner space (i.e., the receiving space) of the vehicle tablet computer 100 can be divided into two different sized portions for reducing limitations to the layout of other electronic components and for effectively preventing the power-charging structure 51 in operation from electro-magnetically interfering with other electronic components

Moreover, when the power-charging structure 51 is connected to the charging plug, the terminal cannot touch the two metal pads 511 at the same time based on the interval G greater than the maximum diameter of the contact region 512, thereby effectively preventing the power-charging structure 51 from being inoperable. Specifically, the interval G in the present embodiment is within a range of 0.8 - 1.2 mm, thereby effectively preventing the two metal pads 511 from electro-magnetically interfering with each other during an electricity transmission of the two metal pads 511.

In addition, when a lightning is generated outside of the vehicle tablet computer 100, the USB socket 52 and the two metal pads 511 of the power-charging structure 51 can effectively avoid experiencing an electro-magnetic interference of the lightning by being arranged in the mating slot 131 of the insulating housing 1.

Furthermore, the controller 33 is configured to stop the USB socket 52 from providing electricity when the USB socket 52 and the power-charging structure 51 simultaneously provide electricity to the touch-control module 2 (or the recharging battery 4), thereby preventing the touch-control module 2 (or the recharging battery 4) from being damaged

The foregoing description of the exemplary embodiments of the disclosure has been presented only for the purposes of illustration and description and is not intended to be exhaustive or to limit the disclosure to the precise forms disclosed. Many modifications and variations are possible in light of the above teaching.

The embodiments were chosen and described in order to explain the principles of the disclosure and their practical application so as to enable others skilled in the art to utilize the disclosure and various embodiments and with various modifications as are suited to the particular use contemplated. Alternative embodiments will become apparent to those skilled in the art to which the present disclosure pertains without departing from its spirit and scope.

## Claims

1. A vehicle tablet computer, comprising:
a housing (1) having two long lateral sides (12) and two short lateral sides (13), wherein the housing (1) surroundingly defines a receiving space;
a touch-control module (2) arranged in the receiving space of the housing (1) and having an outer surface (21) exposed from the housing (1), wherein the outer surface (21) defines two diagonal lines (L) that intersect to define a point (P); and
a power-charging structure (51) disposed on one of the two short lateral sides (13) and electrically coupled to the touch-control module (2), wherein the power-charging structure (51) has two metal pads (511) exposed from the housing (1), and any one of the two metal pads (511) defines at least one contact region (512) for being abutted against a terminal of a charging plug, and wherein the two metal pads (511) have an interval (G) there-between that is greater than a maximum diameter of the at least one contact region (512),
wherein a projection region defined by orthogonally projecting any one of the two metal pads (511) onto a plane that overlaps with the outer surface (21) is located within an angle range of 12 - 18 degrees defined between the point (P), being taken as an apex, and an adjacent one of the two diagonal lines (L).

2. The vehicle tablet computer according to claim 1, further comprising a USB socket (52) disposed in the housing (1) and electrically coupled to the touch-control module (2), wherein the USB socket (52) and the power-charging structure (51) are disposed on the same short lateral side (13) and are arranged adjacent to each other.

3. The vehicle tablet computer according to claim 2, further comprising a circuit board assembly (3) disposed in the housing (1) and including a power supply circuit (31) connected to the touch-control module (2), wherein the USB socket (52) and the power-charging structure (51) are mounted on the circuit board assembly (3) and are electrically coupled to the power supply circuit (31).

4. The vehicle tablet computer according to claim 3, wherein the circuit board assembly (3) includes a controller (33) that is configured to stop the USB socket (52) from supplying electricity when the USB socket (52) and the power-charging structure (51) simultaneously supply electricity to the touch-control module (2).

5. The vehicle tablet computer according to claim 2, wherein the housing (1) has a mating slot (131) recessed in the short lateral side (13) that is adjacent to the USB socket (52) and the power-charging structure (51), and an insertion opening of the USB socket and the two metal pads (511) of the power-charging structure (51) are each arranged in the mating slot (131).

6. The vehicle tablet computer according to claim 1, wherein the housing (1) includes a back board (14) connected to the two long lateral sides (12) and the two short lateral sides (13), and the vehicle tablet computer (100) further includes a photograph module (54) mounted on the back board (14), and wherein a projection region defined by orthogonally projecting the photograph module (54) onto the plane is arranged in an angle scope defined by taking the point (P) to be an apex and counting from any one of the two diagonal lines (L) with 22 - 40 degrees.

7. The vehicle tablet computer according to claim 6, wherein the back board (14) includes a main segment (141) connected to the two long lateral sides (12) and two end segments (142) respectively arranged at two opposite sides of the main segment (141) and respectively connected to the two short lateral sides (13), wherein each of the two end segments (142) has a flat surface (1421) arranged on a center thereof and two curved surfaces (1422) respectively arranged at two opposite sides of the flat surface (1421), and wherein the photograph module (54) is exposed from the housing (1) through the flat surface (1421).

8. The vehicle tablet computer according to claim 1, further comprising a barcode scanner (53) disposed in the housing (1) and electrically coupled to the touch-control module (2), wherein the barcode scanner (53) and the power-charging structure (51) are disposed on the same short lateral side (13).

9. The vehicle tablet computer according to claim 8, wherein a projection region defined by orthogonally projecting the barcode scanner (53) onto the plane is arranged in an angle scope defined by taking the point (P) to be an apex and counting from any one of the two diagonal lines (L) with 26 - 37 degrees.

10. The vehicle tablet computer according to claim 1, wherein the interval (G) is within a range of 0.8 - 1.2 mm.
